# EUROPEAN PATENT SPECIFICATION

(11) **EP 1 854 291 B1**
(45) Date of publication and mention of the grant of the patent: **15.04.2015**
(21) Application number: 06735736.8
(22) Date of filing: 23.02.2006
(51) Int. Cl.: H04N 21/2343, H04N 21/2387, H04N 5/783, H04N 7/173

(54) **SYSTEM AND METHOD FOR GENERATING TRICK MODE STREAMS**
SYSTEM UND VERFAHREN ZUM ERZEUGEN VON DATENSTROMEN FÜR TRICKWIEDERGABE
SYSTÈME ET PROCÉDÉ POUR LA GÉNÉRATION DE TRAINS DE DONNÉES EN MODE DE LECTURE SPÉCIALE

(30) Priority: 01.03.2005 US 69297
(43) Date of publication of application: 14.11.2007
(73) Proprietor: Cisco Technology, Inc., San Jose, CA 95134 (US)
(72) Inventor: NALLUR, Ramesh, Suwanee, Georgia 30024 (US); REN, Jianxin, Lawrenceville, Georgia 30044 (US); GUO, Hank, Suwanee, Georgia 30024 (US); CHAN, Peter, Suwanee, Georgia 30024 (US); COOK, Ben, Flowery Branch, Georgia 30542 (US)
(74) Representative: Mathys & Squire LLP
(86) International application number: PCT/US2006/006200
(87) International publication number: WO 2006/093740

(56) References cited:
- EP-A- 1 148 727
- EP-A1- 1 388 862
- US-A1- 2003 118 116

## Description

### TECHNICAL FIELD

The present disclosure is generally related to trick mode streams in digital video recorders, and more specifically, to trick mode streams in distributed digital video recorder systems.

### BACKGROUND

Many consumers receive entertainment programming in their homes from a cable television operator. Many of today's cable offerings are broadcast using digital signals, which make more efficient use of communication bandwidth, and thus allow more programming to be carried on the same cable. In these cable systems, video programming (e.g., television programs, movies, etc.) is encoded at the cable head-end using a Motion Pictures Experts Group (MPEG) standard. The programming is transmitted from the head-end to the customer premises over a cable. At the customer premises, a digital home communication terminal (DHCT) decodes the programming and generates an analog picture signal. The analog picture is displayed by a television connected to the DHCT.

Some of today's DHCT units incorporate digital video recorder (DVR) functionality, which allows the DHCT to record video programming in digital form. These DHCTs can decode and display a video program in real-time from the head-end, or can decode and display a recorded program. A variation on the basic DHCT DVR is a distributed DVR system: a network of DHCT units, with one DHCT acting as the recorder and another acting as the player.

Popular DVR features include the ability to fast-forward, rewind, and pause a recorded program. These features are sometimes referred to as "trick modes." Implementing trick modes often includes displaying frames at a faster or slower rate. Some trick modes also involve selecting only a subset of frames to decode and display. For example, fast-forwardx2 may choose frames 500 ms apart, and display them every 250 ms, while fast-forwardx4 may choose frames 500 ms apart and displaying them every 1000 ms. Pause can be implemented by decoding and displaying the same frame repeatedly.

There are several problems associated with implementing trick modes in a distributed DVR system. Video frames in the MPEG stream contain presentation timestamps that tell the decoder when to display a particular frame and/or decoder timestamps that tell the decoder when to decode a particular frame. The clock reference for these timestamps is provided by a program clock reference (PCR) that is also embedded in the MPEG stream. When the DVR records a video program, it records the stream as sent by the head-end, including the timestamps and the PCR. When this same stream is sent to the player DHCT in a trick mode, the clock reference provided by the PCR is incomplete, since many frames are skipped. Thus, the decoder in the player DHCT cannot rely on a clock recreated from the received PCR. Furthermore, even if the PCR was good, not every video frame in the MPEG stream has a timestamp. For at least these reasons, the distributed DVR system cannot use recorded PCR and timestamps for decoder timing.

Another approach is for the player DVR to generate a timestamp similar to a local PCR, and to transmit this timestamp in the stream. However, on many DHCTs, the recorded stream is stored in encrypted form, so that altering it requires first decryption and then re-encryption. The computational power required for this makes this approach infeasible.

In addition to these problems related to timing, there are other problems as well. When a state transition occurs from, for example, fast-forward mode to play mode, the decoder must know at exactly which frame this transition occurs. Otherwise, improper decoding will occur and the user will see artifacts. In a typical integrated DVR, this is easily accomplished. Since the video source resides in the same unit as the decoder, communication between the two occurs at relatively high bus speeds. Thus, the source can receive state change information back from the decoder before any further frames are communicated to the decoder. In contrast, communication between the recorder (source) and the player (decoder) in a distributed DVR system takes place at network speeds, which are much slower than bus speeds. This communication mechanism is often not fast enough to accurately communicate state transitions to the decoder.

### DESCRIPTION OF THE DRAWINGS

FIG. 1 is a block diagram of the environment of the system for generating trick mode streams.
FIG. 2 is a block diagram illustrating selected components of one embodiment of the DHCT of FIG. 1.
FIG. 3 illustrates several different picture types defined by the MPEG standard.
FIG. 4 illustrates the process of packetizing an elementary video stream.
FIG. 5 illustrates segmentation of the video stream of FIG. 4 into an MPEG transport stream.
FIG. 6 illustrates a stored transport stream consisting of TS packets encapsulating the video elementary stream of a user-specified program.
FIG. 7 is a flow chart illustrating the actions taken by trick mode logic in a server DHCT.
FIG. 8 is a diagram of example trick mode transport stream created by trick mode logic in a server DHCT.
FIG. 9 is a flow chart illustrating the actions taken by trick mode logic in a client DHCT.

### DETAILED DESCRIPTION

In one embodiment, among others, the method supports trick modes in a distributed DVR system by inserting trick mode control packets into the MPEG stream sent from the recorder to the player. The decoder in the player relies on instructions in these control packets to determine the time at which frames are decoded rather than using timestamps in the originally received stream. Specifically, these instructions tell the decoder how many bytes should be buffered before decoding begins, and when a buffer of frames should be displayed. In one embodiment, the recorder sends a trick mode control packet, followed by the selected I-frame, followed by the picture header of the next frame, and then the sequence repeats with the next selected I-frame. In some embodiments, the control packet also contains additional information such as: ignore timestamps beginning with this frame; disable audio beginning with this frame; current trick mode (normal play, fast-forwardx2, fast-forwardx4, rewind, slow-motion, etc.); and whether the current stream contains I-frames or not.

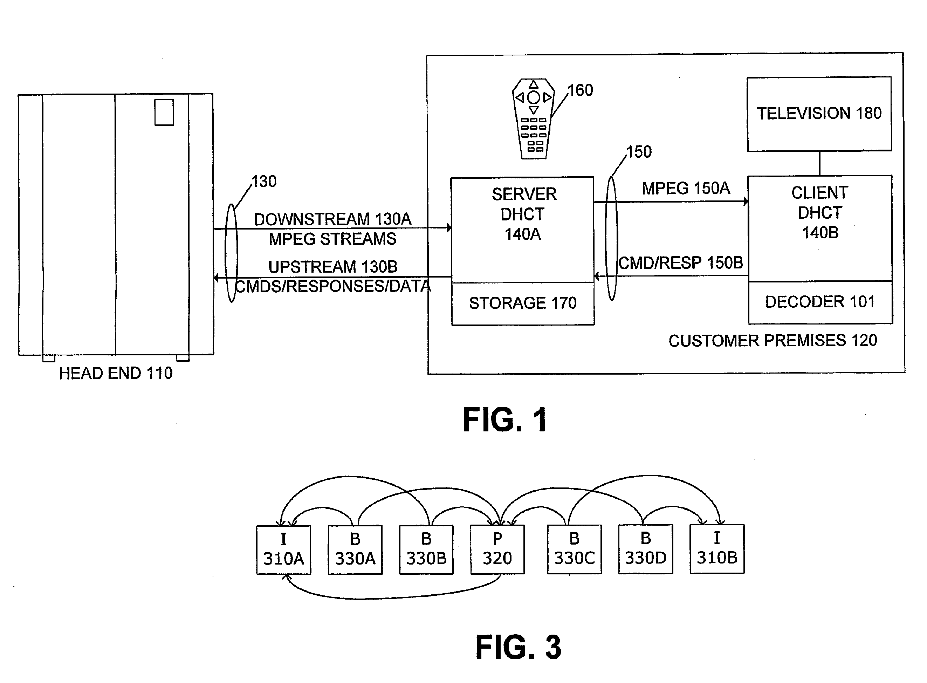

FIG. 1 is a block diagram of the environment of the system for generating trick mode streams. Head-end 110 provides digital services (video, audio and/or data) to customer premises 120 over bi-directional communication channel 130. These services may include, for example, broadcast television services, cable television services, premium television services, video-on-demand (VOD) services, pay-per-view (PPV) services, and/or Internet data services, among others. In one embodiment, communication channel 130 is a hybrid fiber-coax (HFC) cable. Other delivery mechanisms are also contemplated, for example, satellite, and/or satellite in combination with a cable or a telephone line.

The standard used by head-end 110 is the MPEG-2 standard, which describes how video and audio are compressed and coded to produce elementary streams. The MPEG-2 standard also describes how the elementary streams are multiplexed, transmitted, and demultiplexed, and how synchronization is achieved between elementary streams. Head-end 110 transmits multiplexed MPEG streams containing video, audio, and/or data to customer premises 120 over communication channel 130 (in the "downstream" direction). Typically, the downstream communication channel 130A contains one or more RF channels or frequencies, and each of these RF channels carries one MPEG transport stream. The MPEG transport stream is multiplexed to carry multiple elementary streams. For simplicity, the remainder of this discussion will discuss a single RF channel carrying an MPEG transport stream.

Customer premises 120 contains at least two DHCTs, 140A and 140B. In one embodiment, a DHCT is a standalone, integrated unit. In another embodiment, a DHCT is integrated into another consumer device, such as a television, among others. Server DHCT 140A receives streams over downstream channel 130A. Server DHCT 140A transmits commands, responses, and data to head-end 110 over upstream communication channel 130B. Client DHCT 140B is not in direct communication with head-end 110, but is coupled to server DHCT 140A via home network 150. Remote control 160 allows users to control one or more of the DHCT units.

Server DHCT 140A has the capability to record MPEG transport streams received from head-end 110 onto a storage medium 170. Server DHCT 140A can also transmit a recorded stream to client DHCT 140B over channel 150A, which is part of network 150. Channel 150A is also used to communicate commands and responses to client DHCT 140B. An MPEG decoder in client DHCT 140B decodes the stream and provides it to television 180 for display. Client DHCT 140B can transmit commands, responses, and status information to server DHCT 140A over channel 150B, which is part of network 150. In one embodiment, server DHCT 140A also includes an MPEG decoder and provides it to an attached television (not shown).

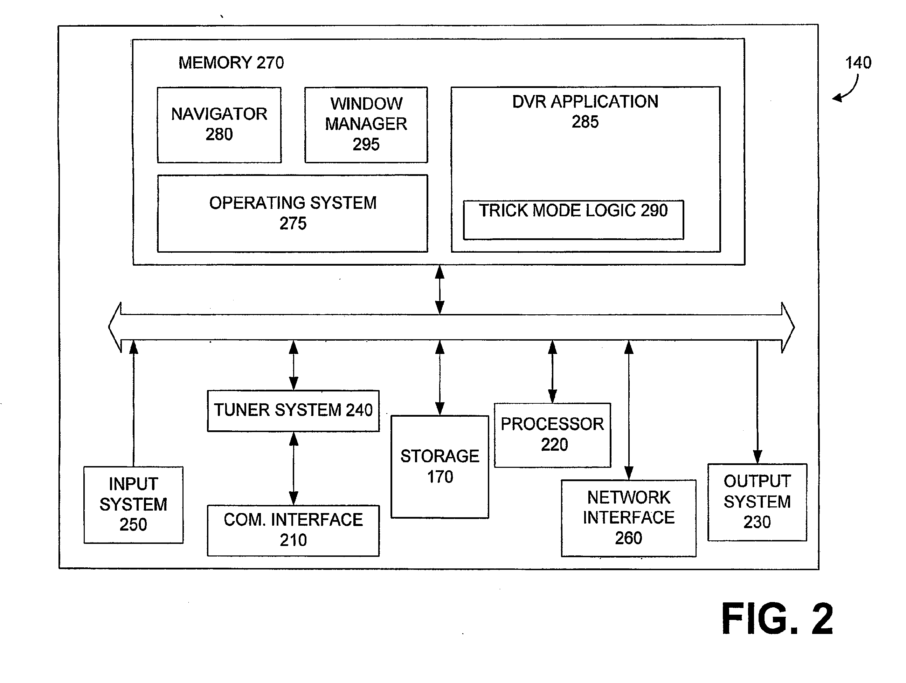

FIG. 2 is a block diagram illustrating selected components of one embodiment of DHCT 140A or 140B from FIG. 1. DHCT 140 comprises a communications interface 210 for receiving video, audio and other data from head-end 110 (FIG. 1), and for providing reverse information to head-end 110. DHCT 140 further includes at least one processor 220 for controlling operations of DHCT 140, an output system 230 for driving a display device (e.g., television 180), and a tuner system 240. Tuner system 240 tunes to a particular television service to be displayed via the display device, and sends and receives various types of data to/from head-end 110. Tuner system 240 includes in one implementation, an out-of-band tuner for bi-directional quadrature phase shift keying (QPSK) data communication and a quadrature amplitude modulation (QAM) tuner for receiving television signals. Input system 250 receives user inputs that are provided via an input device such as, for example, remote control 160 (FIG. 1), a transmitter with buttons or keys located on the exterior of the DHCT, or a keyboard.

Network interface 260 is an interface for transmitting and/or receiving data to/from another DHCT. Network interface 260 may comprise, for example, an Ethernet interface, an IEEE-1394 interface, a USB (Universal Serial Bus) interface, a serial interface, a parallel interface, a wireless radio frequency (RF) interface, a telephone line interface, a power line interface, a coaxial cable interface, and/or an infrared (IR) interface, among others. In one possible implementation, the network interface 260 is an Ethernet interface, which is coupled one or more DHCTs via an Ethernet hub.

Memory 270, which may include volatile and/or non-volatile memory, stores one or more programmed software applications, herein referred to as applications, which contain instructions that may be executed by processor 220 under the direction of operating system 275. Input data used by an application is stored in memory 270 and read by processor 220 as needed during the course of the application's execution. This input data may be data stored in memory 270 by a secondary application or other source, either internal or external to DHCT 140, or may be data that was created with the application at the time it was generated as a software application program. Data transmitted by head-end 110 may be received via communications interface 210, whereas user input may be received from an input device via input system 250. Data generated by an application is stored in memory 270 by processor 220 during the course of the application's execution. Availability, location, and amount of data generated by one application for consumption by another application are communicated by messages through the services of operating system 280.

A navigator application 280 provides a navigation framework for services provided by DHCT 140. Navigator 280 registers for and in some cases reserves certain user inputs related to navigational keys such as channel increment/decrement, last channel, favorite channel, etc. Navigator 280 also provides users with television related menu options that correspond to DHCT functions such as, for example, providing an interactive program guide, blocking a channel or a group of channels from being displayed in a channel menu, and displaying a purchase list for a video-on-demand service.

Under user instruction, DVR application 285 records and/or and plays back received programs. DVR application 285 includes trick mode logic 290. When this system is used to implement server DHCT 140A, trick mode logic 290 creates a trick mode stream corresponding to the recorded stream, and provides it to client DHCT 140B using network interface 260. When this system is used to implement client DHCT 140B, trick mode logic 290 decodes and display the received trick mode stream.

Applications, such as navigator 280 and DVR 285, utilize services provided by window manager 295 and other graphics utilities provided by operating system 275 to draw menus, graphics, etc. for display on television 180. Window manager 295, which in one embodiment is part of operating system 275, contains functionality for allocating screen areas and managing screen use among multiple applications.

Applications executed by DHCT 140 comprise executable instructions for implementing logical functions. The applications can be embodied in any computer-readable medium for use by or in connection with an instruction execution system. The instruction execution system may be, for example, a computer-based system, a processor-containing system, or any other system capable of executing instructions. In the context of this document, a "computer-readable medium" can be any means that can contain, store, communicate, propagate, or transport the program for use by or in connection with the instruction execution system, apparatus, or device.

The computer-readable medium can be, for example, but is not limited to, an electronic, solid-state, magnetic, optical, electromagnetic, infrared, or semiconductor system, apparatus, device, or propagation medium, either internal to DHCT 140 or externally connected to DHCT 140 via one or more communication ports or network interfaces. More specific examples (a non-exhaustive list) of the computer-readable medium would include the following: an electrical connection (electronic) having one or more wires, a portable computer diskette (magnetic), a hard drive storage device (magnetic), a random access memory (RAM) (solid-state device), a read-only memory (ROM) (solid-state device), an erasable programmable read-only memory (EPROM or Flash memory) (multiple devices), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

The programming streams provided to DHCT 140 by head-end 110 preferably follow the MPEG-2 set of standards. This set of standards describes how video and audio are compressed and coded to produce elementary streams. The MPEG-2 standards also describe how the elementary streams are multiplexed, transmitted, and demultiplexed, and how synchronization is achieved between elementary streams.

The MPEG-2 standards use the three different picture types shown in FIG. 3 to encode video: I-frames (310A and 310B); P-frames (320); and B-frames (330A-D). An I-frame (intra-frame) is encoded as a single run-length encoded image, independent of any past or future frames. A P-frame (forward predictive frames) is encoded relative to the closest preceding reference frame (I-frame or P-frame). A B-frame (bi-directional predictive frames) is encoded relative to the closest preceding reference frame, the closest following reference frame (I or P), or both frames.

The arrows in FIG. 3 show the dependencies that exist in an example sequence of MPEG video frames. The single P-frame 320 is dependent on the first I-frame 310A. The first two B-frames 330A and 330B are both dependent on the preceding I-frame 310A, and are also dependent on P-frame 320. In the second group of B-frames, 330C and 330D, each is dependent on the single P-frame 320, and is also dependent on the succeeding I-frame 310B.

Although the word "frame" is used, an MPEG frame or picture is not equivalent to what is normally called a "movie frame" or "video frame," since it may not contain enough information to decode and display an entire image. A single I-frame plus some number of P-frames and/or B-frames forms a group of pictures, or GOP, which is guaranteed to contain the information to properly decode and display an image. Thus, a GOP is equivalent to a "movie frame." GOPs can be arranged in a sequence. All pictures in a sequence have the same picture size, aspect ratio, and frame rate.

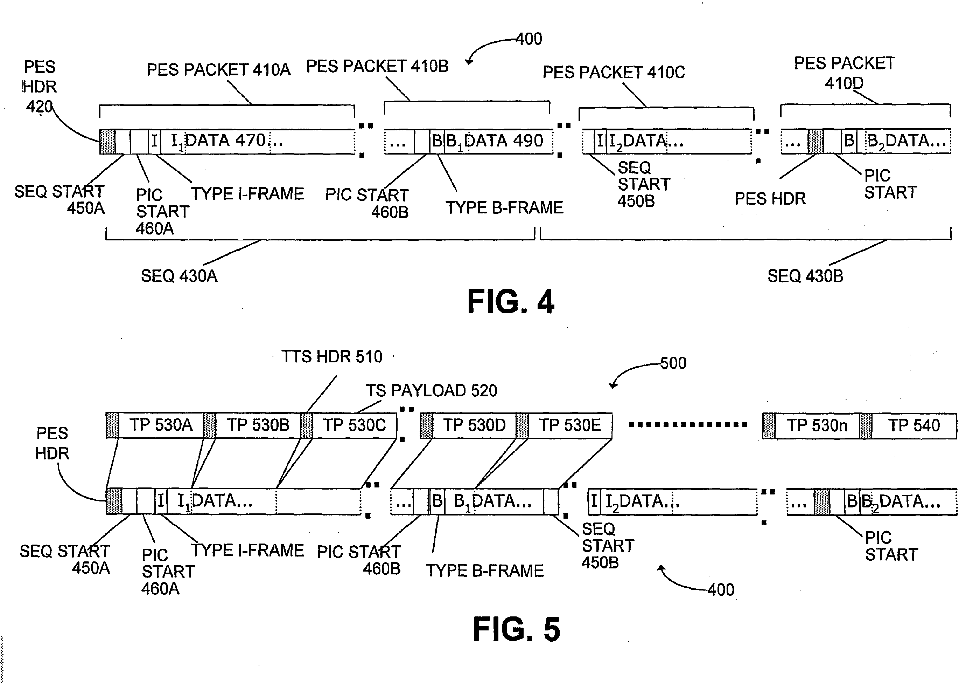

Before a video stream is transmitted from a video source such as head-end 110, the frames are first packetized. This process is shown in FIG. 4. Video stream 400 is an elementary stream, and as such is composed of relatively long variable-length packets called Packetized Elementary Stream (PES) packets. There are four PES packets in FIG. 4, 410A-D. Each PES packet begins with a PES header 420, followed by a variable amount of data. (The last PES packet 410D is only partially shown in this figure.)

The MPEG standard allows the data portion of a PES packet to contain MPEG units described above, where each element begins with a start code. The example embodiments discussed here all contain one picture per PES packet. Video stream 400 contains two sequences, 430A and 430B, each beginning with a sequence start code (450A and 450B). Both sequences contain one I-frame and one B-frame. The I-frame of the first sequence 430 starts with picture start code 460A, followed by I1-data 470. This I-frame is immediately followed by another B-frame, which starts with picture start code 460B, followed by B1-data 490.

There is no sequence end code. Instead, the start of the second sequence 430B is marked by a second sequence start code (450B). The format of the two frames in this sequence is the same as in the first sequence: picture start code followed by data.

The large size of PES packets makes them suitable for storage media, but not as suitable for transmission over error-prone communication channels. For transmission, PES packets are first segmented and then encapsulated into relatively small fixed-size packets called Transport Stream (TS) packets.

FIG. 5 illustrates the segmentation of Video stream 400 from FIG. 4 into MPEG transport stream 500. Each TS packet in transport stream 500 starts with a TS header 510, followed by the TS payload 520. The payload of the first TS packet 530A contains only a portion of the first PES packet 410A. Because PES packets are large relative to TS packets, it takes many TS packets to carry a single PES packet. Successive TS packets 530B-530n carry the rest of PES packet 410A. This can be seen in FIG. 5, where dotted lines mark the PES stream into TS-sized blocks, each of which corresponds to one TS packet. Immediately following TS packet 530n (carrying the end of PES packet 410C) is a TS packet 540 carrying the fourth PES packet 410D.

Server DHCT 140A receives an MPEG transport stream like the one of FIG. 5, and can record the transport stream onto a recordable storage medium 170. This record capability is typically under user control, such that a user can interact with server DHCT 140A to initiate a recording of a specific program (i.e., movie, television program, etc.) at a future time, or to initiate a recording of a specific program at the current time. Since an MPEG transport stream is multiplexed and carries multiple programs, server DHCT 140A does not record every TS packet in a particular transport stream. Instead, server DHCT 140A records only the elementary streams associated with the user-specified program. Thus, server DHCT 140A acts, while recording, to filter out other TS packets that are not associated with this program.

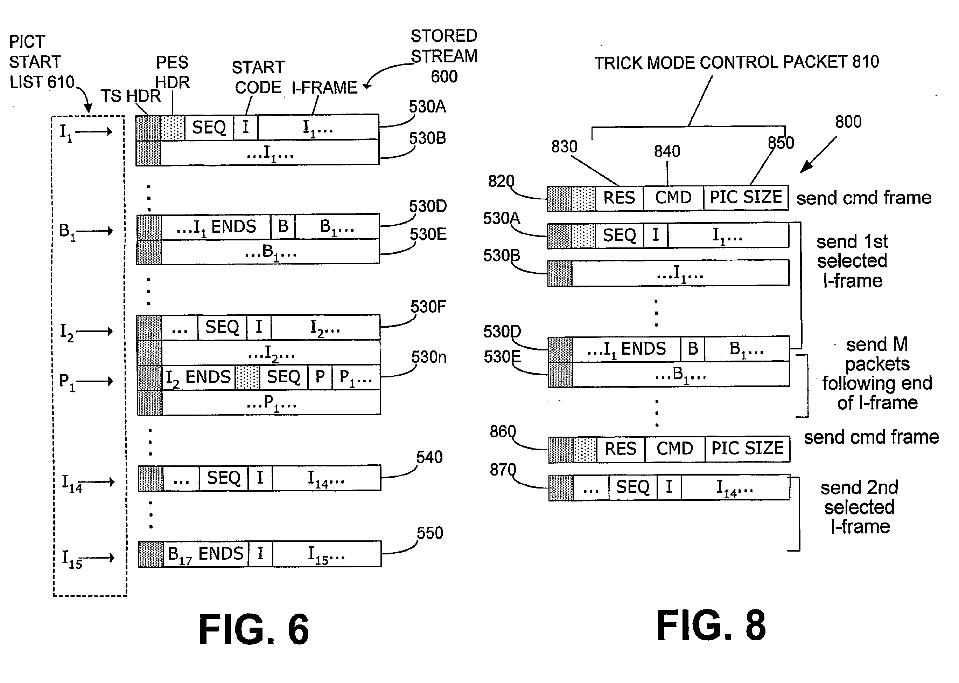

FIG. 6 illustrates a stored transport stream 600 consisting of TS packets encapsulating the video elementary stream of a user-specified program. Although at least one audio stream is also associated with the program and stored on storage medium 170, only the video stream is shown since no audio is provided during trick mode play. The video elementary stream of FIG. 6 is the same video stream 400 of FIGs. 4 and 5. As before, only a portion of the TS packets is shown, since a single MPEG video frame takes up many TS packets. The TS packets are shown as contiguous in FIG. 6, but it is not necessary that they be stored contiguously on the storage medium.

When in trick mode, server DHCT 140A selects a subset of the TS packets in stored transport stream 600 for transmission to client DHCT 140B. (The selection process will be discussed in more detail later.) Picture start list 610 stored on storage medium 170 allows server DHCT 140A to efficiently locate TS packets containing picture frames. Picture start list 610 is a list of all MPEG pictures in the stored transport stream 600, along with a reference to the TS packet containing the start code for that picture. For example, stored transport stream 600 contains five MPEG pictures: I₁; B₁; I₂; P₁;I₁₄; and I₁₅. Picture start list 610 therefore contains the following entries: I₁, starts in TS packet 530A; B₁ starts in TS packet 530D; I₂ starts in TS packet 530F; P₁ starts in TS packet 530n; I₁₄ starts in TS packet 540; and I₁₅ starts in TS packet 550.

Picture start list 610 is useful when the recorded TS packets are encrypted and server DHCT 140A cannot examine the TS payload contents to look for picture start codes. In this case, picture start list 610 is created as stored transport stream 600 is recorded, which involves temporarily decrypting the TS packets. In another embodiment, stored transport stream 600 is not encrypted, and a separate picture start list 610 is unnecessary because server DHCT 140A can scan the TS payloads for picture start codes.

To implement trick mode, trick mode logic 290 in server DHCT 140A creates a trick mode stream corresponding to a recorded stream, by inserting trick mode command packets into the stream transmitted to client DHCT 140B. Trick mode logic 290 in server DHCT 140A also paces the transmission of picture frames according to the selected trick mode. For example, when the mode is fast-forwardx2, twice as many pictures frames are transmitted in the same time period, compared to normal play. Trick mode logic 290 in client DHCT 140B relies on instructions in these command packets to determine the time at which frames are decoded rather than using timestamps in the received stream. These instructions tell the decoder how many bytes should be buffered before decoding begins, and when a decode frame should be displayed. In some embodiments, the command packet also specifies additional information such as: ignore timestamps beginning with this frame; disable audio beginning with this frame; current trick mode (normal play, fast-forwardx2, fast-forwardx4, rewind, slow-motion, etc.); and whether the current stream contains I-frames or not.

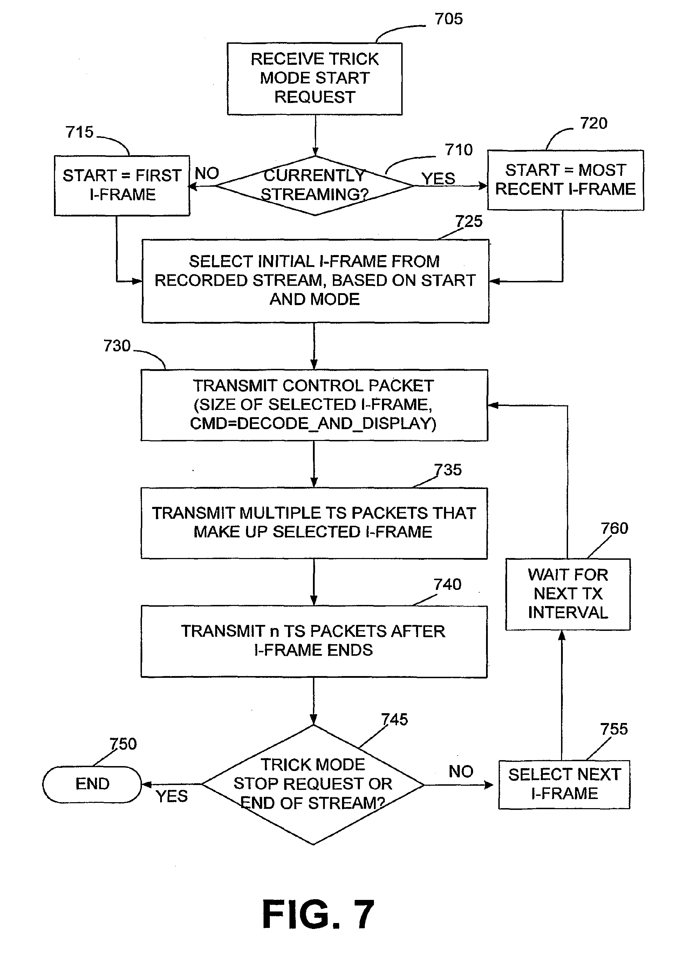

FIG. 7 is a flow chart illustrating one example of actions taken by trick mode logic 290 in server DHCT 140A. In accordance with one embodiment of the method of generating trick mode streams, server DHCT 140A selects and transmits a subset of I-frames from stored transport stream 500, where the number of frames and the transmission interval is chosen to maintain the trick mode speed. The process begins in step 705, where server DHCT 140A receives a request to start trick mode from client DHCT 140B. Since there are multiple trick modes, the request identifies the trick mode, for example, the direction and speed (e.g., fast-forwardx2, rewindx2) and/or type (e.g., pause, slow-motion). The request is received over channel 150A. The details of the request protocol used to communicate this request to server DHCT 140A are not important to the system and method for generating a trick mode stream. The request protocol will not be discussed further, as examples of such would be understood by those reasonably skilled in the art of the present disclosure.

On receipt of the trick mode request, server DHCT 140A determines the correct start position within the recorded stream. This is accomplished by first determining, in step 710, whether it is currently transmitting the recorded stream to client DHCT 140B. If No, the process continues at step 715, where the start position is initialized to the first I-frame in the recorded stream. If Yes, the process continues at step 720, where the start position is initialized to the most recently transmitted I-frame in the recorded stream.

After the start position is initialized, server DHCT 140A selects a series of I-frames to be transmitted to client DHCT 140B. At step 725, the first I-frame is selected, based on the start position and the specific mode selected. For example, if the start position is the last frame in the recorded stream and the mode is rewindx2, then the first selected I-frame is the I-frame 500 ms before the last frame. In another example, if the start position is the first frame and the mode is slow-motion, then the first selected I-frame is the first I-frame in the recorded stream. Further details about the selection criteria used by an example embodiment of the system for generating trick mode streams are found in Table 1.

**Table 1**

| Trick Mode | Selection Criteria | Transmit Interval | Decoder Command |
|---|---|---|---|
| fast-forwardx2 | I-frame 500 ms forward | 250 ms | Decode_and_Display |
| fast-forwardx4 | | 125 ms | |
| fast-forwardx6 | | 83 ms | |
| fast-rewindx2 | I-frame 500 ms backward | 250 ms | |
| fast-rewindx4 | | 125 ms | |
| fast-rewindx6 | | 83 ms | |
| pause | select same I- frame | 500 ms | |
| slow motion forward | select next frame | 500 ms | |
| frame-advance | select next frame (I-frame, B-frame or P-frame) | not applicable (send frame once) | |
| frame-reverse | select previous I-frame | not applicable (send frame once) | |

Once an I-frame is selected, server DHCT 140A continues to step 730 where a trick mode control packet is created and transmitted to client DHCT 140B. The control packet contains the total size of the transport packet payloads following the control packet, and a decoder command. The decoder command instructs the decoder in client DHCT 140B how to handle the picture frame once it has been received in the decoder's buffer. The decoder command depends on the characteristics of the recorded stream. If the recorded stream contains I-frames, then the decoder command is Decode_and_Display. If the recorded stream contains no I-frames, the command is Decode_Only. In one embodiment, the command Normal_Play is also supported. Normal_Play tells the decoder to decode the stream normally.

Server DHCT 140A then continues to step 735 and transmits all the TS packets that make up the selected 1-frame. In one embodiment, server DHCT 140A uses picture start list 510 to find the TS packet containing the start of a particular picture frame. Note that there may be PES packets with a non-zero length field. The last such PES packet containing I-frame data may be incomplete as a result of the selection. For those PES packets, additional stuffing TS packets are added so that the PES packets are complete. At step 740, after transmitting the entire I-frame, server DHCT 140A transmits an additional number (M) of TS packets following the last TS packet containing the selected I-frame. These additional TS packets allow the decoder to skip the data of the next picture frame in a clean manner. (This feature will be described in connection with FIG. 8.) The size field in the control packet includes the size of the selected I-frame plus the additional TS packets.

Next, server DHCT 140A determines if processing of this trick mode stream is complete. At step 745, server DHCT 140A determines if either a trick mode stop request has been received, or the end of the recorded stream has been reached. If one of the these conditions is TRUE, trick mode stream processing ends, at step 750. If client DHCT 140B has requested server DHCT 140A to stop the trick mode stream, server DHCT 140A transmits a trick mode control packet indicating the end of the trick mode stream.

If neither condition is true, trick mode stream processing continues at step 755, where the next I-frame is selected based on the current position and the mode. Next, at step 760, server DHCT 140A waits for an appropriate time interval before transmitting the next trick mode control packet and selected picture frame. The time interval is based on the trick mode (see Table 1). Next, the transmission of trick mode control packet and selected picture frame is repeated, starting at step 730. One skilled in the art will realize that the order of selecting the next frame, creating the control packet, and waiting for transmission can be varied. For example, the wait can occur before the selection, or the control packet can be created before the selection.

FIG. 8 illustrates an example trick mode transport stream 800 created by trick mode logic 290 in server DHCT 140A and transmitted to client DHCT 140B. As described with reference to FIG. 7, trick mode transport stream 800 consists of a combination of trick mode control packets and TS packets selected from stored transport stream 600 (see FIG. 6). The trick mode control packet 810 is encapsulated in a PES packet, which itself is encapsulated in TS packet 820. The control packet starts with a start code, like any other PES packet. Since the control packet is not part of the MPEG standard, start code 830 is set to a reserved value. Also included in control packet 810 is a decoder command 840 and the picture size 850. Both of these items were described earlier in connection with FIG. 7, and also in Table 1. The trick mode control packet 810 is part of the video stream transmitted to client DHCT 140B.

In some embodiments, control packet 810 also contains a trick string describing the trick mode. Examples of trick mode strings include "FFWD", "PAUS", "SRWD" (step rewind), "SLMF" (slow motion forward) and "END" (end of trick mode stream). In some embodiments, control packet 810 also contains a time code, which indicates the time at which server DHCT 140A sent the control packet 810. This is a relative time, and is an indication of the speed of the trick mode stream. For example, in a fast-forwardx2 stream, the time code for successive trick mode control packets would be 0, 500, 1000, 1500 (in milliseconds).

The next TS packet in the trick mode transport stream 800, following control packet 810, is TS packet 530A. TS packet 530A contains the start of the first selected picture frame. Next in the transmitted stream is TS packet 530B, which continues the data of the selected picture frame. The selected picture frame ends with TS packet 530D. Server DHCT 140A then transmits some number (M) of TS packets following this end, enough so that the next picture header is transmitted. Next in the stream is another trick mode control packet 860, followed by the TS packet 870 containing the start of the next selected picture frame.

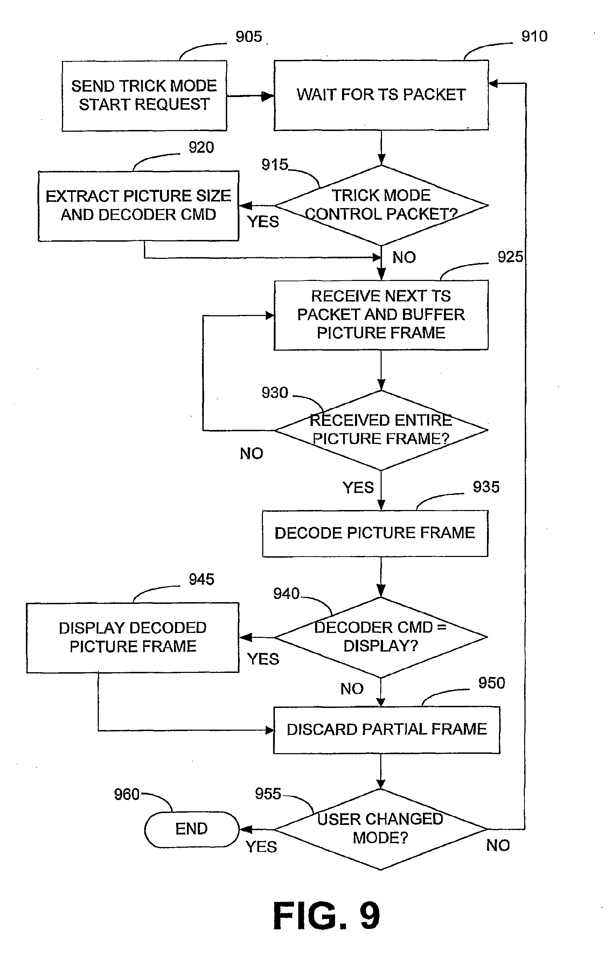

FIG. 9 is a flow chart illustrating the actions taken by trick mode logic 290 in client DHCT 140B in accordance with the method of generating trick mode streams. In this example embodiment, trick mode is initiated by user interaction with client DHCT 140B, for example, by a user pressing a "pause" or "fast-forward" key on remote control 160 (see FIG. 1). As indicated in step 905, client DHCT 140B transmits a trick mode start request to server DHCT 140A over channel 150B. (As noted above, the details of the request protocol are not important to the system and method for generating a trick mode stream.) After transmitting the request, client DHCT 140B waits at step 910 to receive a TS packet.

When a TS packet is received, the process continues at step 915. The contents of the TS packet are examined to determine if the TS packet contains a trick mode control packet 810. If Yes, client DHCT 140B acts in step 920 to extract decoder command 840 and picture size 850 from the received control packet 810. Next, at step 925, client DHCT 140B receives the next TS packet, and buffers the picture frame contained within this TS packet. After receiving the next TS packet, client DHCT 140B determines, at step 930, if all TS packets following this control packet have been received. This determination is made using the picture size 850 in control packet 810, received before the picture frame. If No, client DHCT 140B waits for the next TS packet at step 925.

When the entire picture frame has been received, processing continues at step 935, where the picture frame is decoded. Step 940 then examines decoder command 840 from received control packet 810. If decoder command 840 indicates that the frame should be displayed, this occurs in Step 945. In Step 950, any partial frame received in the accumulated TS packets is discarded. Because picture frames are not required to align on a TS packet boundary, the TS packet containing the end of an I-frame may also contain the start of the next frame (usually a B-frame). In order to discard this partial frame, client DHCT 140B must receive the entire picture header of the partial frame. Having the server DHCT 140A transmit a relatively large number of extra TS packets makes it almost certain that the entire picture header is received. It has been empirically determined that transmitting 10 extra TS packets gives acceptable results (although it is possible that a long header would extend past the tenth packet). Next, client DHCT 140B determines at step 955 if the user has changed modes, for example, from one trick mode to another, or from trick mode to normal play. If Yes, the process ends at step 960. Otherwise, client DHCT 140B returns to step 910 to wait for another TS packet, containing either another control packet 810 or another picture frame.

In the embodiments describe above, the TS packets selected for trick mode transport stream 800 contained I-frames. I-frames are preferred over B-frames or P-frames, since I-frames can be decoded independently. However, it is possible that stored transport stream 600 will not contain any I-frames. An alternative embodiment handles a non-I-frame recorded stream by first instructing the decoder to decode, but not display, a number of P-frames, and later sending a Decode_and_Display instruction. First, a trick mode control packet 810 is constructed with the Decode_Only instruction. This Decode_Only control packet is sent, followed by a complete P-frame. This Decode_Only+P-frame sequence is repeated a number of times (in one embodiment, 12 times).

After receiving this sequence of P-frames, the decoder has buffered and decoded all the P-frames, but has not yet displayed any frames. Next, a Decode_And_Display control packet is sent, followed by an additional complete P-frame. After receiving this additional P-frame, the decoder displays the decoded frames built from the entire sequence of P-frames.

The foregoing description has been presented for purposes of illustration and description. It is not intended to be exhaustive or to limit the disclosure to the precise forms disclosed. Obvious modifications or variations are possible in light of the above teachings. The embodiments discussed, however, were chosen, and described to illustrate the principles of the disclosure and its practical application to thereby enable one of ordinary skill in the art to utilize the invention in various embodiments and with various modifications as are suited to the particular use contemplated.

## Claims

1. A digital home communication system comprising:
a network (15);
a server digital home communication terminal, DHCT, (140A) coupled to said network (150); and
a client digital home communication terminal, DHCT, (140B) in communication with said server DHCT via said network and comprising a video decoder (101);
wherein said server DHCT is configured to create a trick mode stream corresponding to a recorded video stream recorded on the server DHCT, in response to a trick mode request (705) from the client DHCT requesting a trick mode on the client DHCT, the trick mode stream comprising a series of encoded picture frames selected from the recorded video stream, the server DHCT (140A) comprising:
a network interface (260) to communicate with the client DHCT (140B) via said network;
a storage medium (170) storing the recorded video stream;
a memory (270) having stored thereon at least one programmed application; and
a processor (220) that is programmed by the programmed application to enable the server DHCT (140A) to:
select (715, 720) a start position of the trick mode in the recorded stream; and
select the series of encoded picture frames to be transmitted to the client DHCT (140B), the server DHCT (140A) being configured to:
select (725) a first encoded picture frame from the recorded video stream on the storage medium (170) based on the start position and the trick mode;
retrieve a first sequence of transport packets encapsulating the first picture frame;
create a first transport packet containing a first client control packet associated with the first picture frame, the first client control packet comprising the size of the first picture frame and a decoder command for the video decoder (101) of the client DHCT (140B), the decoder command comprising instructions indicating the video decoder (101) a time at which a decoded frame should be displayed;
transmit, to the video decoder (101) of the client DHCT (140B), a trick mode stream comprising the first transport packet followed by the first sequence of transport packets, and
repeat the selecting, retrieving, creating and transmitting with a next selected encoded picture frame, until it is determined that either a trick mode stop request has been received and/or an end of the recorded stream has been reached;
wherein the client DHCT (140B) is configured to receive the trick mode stream corresponding to the recorded video stream, the client DHCT comprising:
a network interface to communicate with the server DHCT via the network;
a memory (270) having stored thereon at least one programmed application; and
a processor (220) that is programmed by the programmed application to enable the client DHCT to:
receive, via the network interface, the first transport packet containing the first client control packet associated with the first picture frame, the first client control packet comprising the size of the first picture frame and the decoder command;
receive a sequence of transport packets containing the first picture frame;
determine receipt of the first picture frame based on the size of the first picture frame within the first client control packet and decode the received first picture frame; and
display the decoded picture frame in accordance with the decoder command.

2. The system of claim 1, wherein the decoder command instructs the video decoder whether or not the first picture frame is displayed after decoding.

3. The system of claim 1, wherein the first encoded picture frame is an MPEG I-frame.

4. The system of claim 3, wherein the decoder command instructs the video decoder to display the MPEG I-frame after decoding.

5. The system of claim 1, wherein the encoded picture frame comprises a presentation timestamp, and the control packet instructs the video decoder to display the encoded picture frame at a time based on receiving the encoded picture frame and not on the presentation timestamp.

6. The system of claim 1, wherein the processor of the server DHCT is further programmed to enable the server DHCT to:
retrieve a second sequence of transport packets encapsulating a picture header of a second encoded picture frame, the second picture frame immediately following the first picture frame; and
transmit, to the video decoder, the second sequence, of transport packets.

7. The system of claim 1, wherein the processor of the sever DHCT is further programmed to enable the server DHCT to:
receive a trick mode command from the client DHCT:
select, based on the trick mode command, a third encoded picture frame from the recorded video stream on the storage medium;
retrieve a third sequence of transport packets encapsulating the third picture frame;
create a second transport packet containing a second client control packet associated with the second picture frame, the second client control packet comprising the size of the third picture frame and a command for the video decoder; and
transmit, to the video decoder, the second transport packet followed by the third sequence of transport packets.

8. The system of claim 7, wherein the trick mode command specifies a mode, a direction, and a speed.

9. The system of claim 8, wherein the processor of the server DHCT is further programmed to enable the server DHCT to:
transmit, to the video decoder, at a time based on the speed, the third sequence of transport packets encapsulating the third picture frame.

10. The system of claim 1, wherein the processor of the server DHCT is further programmed to enable the server DHCT to:
select a sequence of P-frames from the recorded video stream on the storage medium;
retrieve a plurality of sequences of transport packets, each sequence encapsulating one of the P-frames; and
for each P-frame in the sequence of P-frames, transmit to the video decoder a command instructing the video decoder to decode but not display the corresponding P-frame, followed by the sequence of transport packets encapsulating the corresponding P-frame.

11. The system of claim 10, wherein the processor of the server DHCT is further programmed to enable the sever DHCT to:
after transmitting the plurality of sequences of transport packets,
select an additional P-frame from the recorded video stream on the storage medium,
retrieve a fourth sequence of transport packets encapsulating the additional P-frame;
transmit, to the video decoder, a transport packet containing a command instructing the video decoder to decode and display the additional P-frame; and
transmit, to the video decoder, the fourth sequence of transport packets.

12. The system of claim 1, wherein the processor of the client DHCT is further programmed to enable the client DHCT to refrain from decoding until the entire sequence of transport packets containing the first picture frame is received.

13. The system of claim 1, wherein the processor of the client DHCT is further programmed to enable the client DHCT to:
extract picture data from each of the sequence of received transport packets;
buffer the picture data; and
responsive to the size of the buffered data reaching the size in the first client control packet, decode the buffered picture data.

14. The system of claim 1, wherein the processor of the client DHCT is further programmed to enable the client DHCT to:
determine if a received transport packet contains a trick mode control packet; responsive to the determining, extract the trick mode control packet from the received transport packet; and
extract the first picture frame size and the decoder command from the trick mode control packet.

15. The system of claim 1, wherein the processor is further programmed to enable the client DHCT to:
receive, after the first picture frame, one or more transport packets containing a partial picture frame; and
discard, without decoding, the partial picture frame.

16. The system of claim 1, wherein the received first picture frame comprises a presentation timestamp, and the processor of the client DHCT is further programmed to enable the client DHCT to display the decoded picture when decoding is complete and not at a time based on the presentation timestamp.

17. The system of claim 1, wherein the client DHCT further comprises:
an input interface configured to receive user input comprising a trick mode command;
wherein the processor of the client DHCT is further programmed to enable the client DHCT to request, responsive to the trick mode command, a trick mode stream from the server DHCT via the network interface.

18. The system of claim 17, wherein the trick mode command specifies a mode, a direction, and a speed.

## Patentansprüche

1. Digitales Heimkommunikationssystem, das Folgendes umfasst:
ein Netzwerk (15);
ein digitales Heimkommunikations-Server-Endgerät (DHCT - Digital Home Communication Terminal) (140A) das mit dem genannten Netzwerk (150) gekoppelt ist; und
ein digitales Heimkommunikations-Client-Endgerät, DHCT, (140B), das mit dem genannten Server-DHCT über das genannte Netzwerk in Verbindung steht und einen Videodecodierer (101) umfasst;
wobei das genannte Server-DHCT für Folgendes konfiguriert ist: Erstellen eines Trick-Modus-Datenstroms, der einem aufgezeichneten Videodatenstrom entspricht, der auf dem Server-DHCT aufgezeichnet ist, als Reaktion auf eine Trick-Modus-Anforderung (705) von dem Client-DHCT, das einen Trick-Modus auf dem Client-DHCT anfordert, wobei der Trick-Modus-Datenstrom, eine Reihe von codierten Bildrahmen umfasst, die aus dem aufgezeichneten Videodatenstrom ausgewählt werden, wobei das Server-DHCT (140A) Folgendes umfasst:
eine Netzwerkschnittstelle (260) zur Kommunikation mit dem Client-DHCT (140B) über das genannte Netzwerk;
ein Speichermedium (170) zum Speichern des aufgezeichneten Videodatenstroms;
einen Speicher (270) auf dem mindestens eine programmierte Anwendung gespeichert ist; und
einen Prozessor (220), der von der programmierten Anwendung dafür programmiert ist, das Server-DHCT (140A) zu befähigen, Folgendes durchzuführen:
Auswählen (715, 720) einer Startposition des Trick-Modus in dem aufgezeichneten Datenstrom; und
Auswählen der Reihe von codierten Bildrahmen, die zum Client-DHCT (140B) übertragen werden sollen, wobei das Server-DHCT (140A) für Folgendes konfiguriert ist:
Auswählen (725) eines ersten codierten Bildrahmens aus dem aufgezeichneten Videodatenstrom auf dem Speichermedium (170) basierend auf der Startposition und dem Trick-Modus;
Abrufen einer ersten Sequenz von Transportpaketen, die den ersten Bildrahmen einkapseln;
Erstellen eines ersten Transportpakets, das ein erstes Client-Steuerpaket enthält, das dem ersten Bildrahmen zugeordnet ist, wobei das erste Client-Steuerpaket Folgendes umfasst: die Größe des ersten Bildrahmens und einen Decodiererbefehl für den Videodecodierer (101) des Client-DHCT (140B), wobei der Decodiererbefehl Anweisungen umfasst, die dem Videodecodierer (101) eine Zeit angeben, zu der ein decodierter Rahmen angezeigt werden soll;
Übertragen zu dem Videodecodierer (101) des Client-DHCT (140B) eines Trickmodus-Datenstroms, der das erste Transportpaket gefolgt von der ersten Sequenz von Transportpaketen umfasst und
Wiederholen des Auswählens, des Abrufens, der Erstellung und der Übertragung mit einem nächsten ausgewählten codierten Bildrahmen, bis festgestellt wird, dass entweder eine Trick-Modus-Stopp-Anforderung empfangen wurde, und/oder ein Ende des aufgezeichneten Datenstroms erreicht wurde;
wobei das Client-DHCT (140B) dafür konfiguriert ist, den Trick-Modus-Datenstrom zu empfangen, der dem aufgezeichneten Videodatenstrom entspricht, wobei das Client-DHCT Folgendes umfasst:
eine Netzwerkschnittstelle zur Kommunikation mit dem Server-DHCT über das Netzwerk;
einen Speicher (270) auf dem mindestens eine programmierte Anwendung gespeichert ist; und
einen Prozessor (220), der von der programmierten Anwendung dafür programmiert ist, das Client-DHCT zu befähigen, Folgendes durchzuführen:
Empfangen über die Netzwerkschnittstelle des ersten Transportpakets, das das erste Client-Steuerpaket enthält, das dem ersten Bildrahmen zugeordnet ist, wobei das erste Client-Steuerpaket die Größe des ersten Bildrahmens und den Decodiererbefehl umfasst;
Empfangen einer Sequenz von Transportpaketen, die den ersten Bildrahmen enthalten;
Ermitteln des Empfangs des ersten Bildrahmens basierend auf der Größe des ersten Bildrahmens innerhalb des ersten Client-Steuerpakets und Dekodieren des empfangenen ersten Bildrahmens; und
Anzeigen des decodierten Bildrahmens gemäß dem Decodiererbefehl.

2. System nach Anspruch 1, wobei der Decodiererbefehl den Videodecodierer anweist, ob der erste Bildrahmen nach dem Decodieren angezeigt wird oder nicht.

3. System nach Anspruch 1, wobei der erste codierte Bildrahmen ein MPEG I-Rahmen ist.

4. System nach Anspruch 3, wobei der Decodiererbefehl den Videodecodierer anweist, den MPEG I-Frame nach der Decodierung anzuzeigen.

5. System nach Anspruch 1, wobei der codierte Bildrahmen einen Präsentationszeitstempel umfasst und das Steuerpaket den Videodecodierer anweist, den codierten Bildrahmen zu einem Zeitpunkt anzuzeigen, der auf dem Empfang des codierten Bildrahmens und nicht auf dem Präsentationszeitstempel basiert.

6. System nach Anspruch 1, wobei der Prozessor des Server-DHCT ferner dafür programmiert ist, das Server-DHCT zu befähigen, Folgendes durchzuführen:
Abrufen einer zweiten Sequenz von Transportpaketen, die einen Bildkopfdatensatz eines zweiten codierten Bildrahmens einkapseln, wobei der zweite Bildrahmen unmittelbar auf den ersten Bildrahmen folgt; und
Übertragen der zweiten Sequenz von Transportpaketen zu dem Videodecodierer.

7. System nach Anspruch 1, wobei der Prozessor des Server-DHCT ferner dafür programmiert ist, das Server-DHCT zu befähigen, Folgendes durchzuführen:
Empangen eines Trick-Modus-Befehls vom Client-DHCT;
Auswählen basierend auf dem Trick-Modus-Befehl eines dritten codierten Bildrahmens aus dem aufgezeichneten Videodatenstrom auf dem Speichermedium;
Abrufen einer dritten Sequenz von Transportpaketen, die den dritten Bildrahmen einkapseln;
Erstellen eines zweiten Transportpakets, das ein zweites Client-Steuerpaket umfasst, das dem zweiten Bildrahmen zugeordnet ist, wobei das zweite Client-Steuerpaket die Größe des dritten Bildrahmens und einen Befehl für den Videodecodierer umfasst; und
Übertragen des zweiten Transportpakets gefolgt von der dritten Sequenz von Transportpaketen zu dem Videodecodierer.

8. System nach Anspruch 7, wobei der Trick-Modus-Befehl einen Modus, eine Richtung und eine Geschwindigkeit angibt.

9. System nach Anspruch 8, wobei der Prozessor des Server-DHCT ferner dafür programmiert ist, das Server-DHCT zu befähigen, Folgendes durchzuführen:
Übertragen der dritten Sequenz von Transportpaketen, die den dritten Bildrahmen einkapseln, zu dem Videodecodierer zu einem Zeitpunkt, der auf der Geschwindigkeit basiert.

10. System nach Anspruch 1, wobei der Prozessor des Server-DHCT ferner dafür programmiert ist, das Server-DHCT zu befähigen, Folgendes durchzuführen:
Auswählen einer Sequenz von P-Rahmen aus dem aufgezeichneten Videodatenstrom auf dem Speichermedium;
Abrufen einer Vielzahl von Sequenzen von Transportpaketen, wobei jede Sequenz einen der P-Rahmen einkapselt; und
für jeden P-Rahmen in der Sequenz von P-Rahmen: Übertragen eines Befehls zu dem Videodecodierer, der den Videodecodierer anweist, den entsprechenden P-Rahmen zu decodieren, ihn jedoch nicht anzuzeigen, gefolgt von der Sequenz von Transportpaketen, die den entsprechenden P-Rahmen einkapseln.

11. System nach Anspruch 10, wobei der Prozessor des Server-DHCT ferner dafür programmiert ist, das Server-DHCT zu befähigen, Folgendes durchzuführen:
nach dem Übertragen der Vielzahl von Sequenzen von Transportpaketen,
Auswählen eines zusätzlichen P-Rahmens aus dem aufgezeichneten Videodatenstrom auf dem Speichermedium,
Abrufen einer vierten Sequenz von Transportpaketen, die den zusätzlichen P-Rahmen einkapseln;
Übertragen zu dem Videodecodierer eines Transportpakets, das einen Befehl enthält, der den Videodecodierer anweist, den zusätzlichen P-Rahmen zu decodieren und anzuzeigen; und
Übertragen der vierten Sequenz von Transportpaketen zu dem Videodecodierer.

12. System nach Anspruch 1, wobei der Prozessor des Client-DHCT ferner dafür programmiert ist, das Client-DHCT zu befähigen, die Decodierung nicht durchzuführen, bis die gesamte Sequenz von Transportpaketen, die den ersten Bildrahmen enthalten, empfangen wurde.

13. System nach Anspruch 1, wobei der Prozessor des Client-DHCT ferner dafür programmiert ist, das Client-DHCT zu befähigen, Folgendes durchzuführen:
Extrahieren von Bilddaten aus jeder der Sequenz von empfangenen Transportpaketen;
Puffern der Bilddaten; und
als Reaktion darauf, dass die Größe der gepufferten Daten die Größe in dem ersten Client-Steuerpaket erreicht, Decodieren der gepufferten Bilddaten.

14. System nach Anspruch 1, wobei der Prozessor des Client-DHCT ferner dafür programmiert ist, das Client-DHCT zu befähigen, Folgendes durchzuführen:
Ermitteln, ob ein empfangenes Transportpaket ein Trick-Modus-Steuerpaket enthält; als Reaktion auf die Ermittlung: Extrahieren des Trick-Modus-Steuerpakets aus dem empfangenen Transportpaket; und
Extrahieren der ersten Bildrahmengröße und des Decodiererbefehls aus dem Trickmodus-Steuerpaket.

15. System nach Anspruch 1, wobei der Prozessor ferner dafür programmiert ist, das Client-DHCT zu befähigen, Folgendes durchzuführen:
Empfangen eines oder mehrerer Transportpakete, die einen Teilbildrahmen enthalten, nach dem ersten Bildrahmen; und
Löschen des Teilbildrahmens, ohne ihn zu decodieren.

16. System nach Anspruch 1, wobei der empfangene erste Bildrahmen einen Präsentationszeitstempel umfasst und der Prozessor des Client-DHCT ferner dafür programmiert ist, das Client-DHCT zu befähigen, das decodierte Bild anzuzeigen, wenn die Decodierung abgeschlossen ist und nicht zu einem Zeitpunkt, der auf dem Präsentationszeitstempel basiert.

17. System nach Anspruch 1, wobei das Client-DHCT ferner Folgendes umfasst:
eine Eingabeschnittstelle, die dafür konfiguriert ist, Benutzereingaben zu empfangen, die einen Trick-Modus-Befehl umfassen;
wobei der Prozessor des Client-DHCT ferner dafür programmiert ist, das Client-DHCT zu befähigen, als Reaktion auf den Trick-Modus-Befehl einen Trick-Modus-Datenstrom von dem Server-DHCT über die Netzwerkschnittstelle anzufordern.

18. System nach Anspruch 17, wobei der Trick-Modus-Befehl einen Modus, eine Richtung und eine Geschwindigkeit angibt.

## Revendications

1. Système de communication domestique numérique, comprenant :
un réseau (15) ;
un terminal de communication domestique numérique, DHCT, serveur (140A) couplé audit réseau (150) ; et
un terminal de communication domestique numérique, DHCT, client (140B) en communication avec ledit DHCT serveur par l'intermédiaire dudit réseau et comportant un décodeur vidéo (101) ;
cas dans lequel ledit DHCT serveur est configuré de façon à créer un flux en mode de lecture spéciale lequel correspond à un flux vidéo enregistré qui a été enregistré sur le DHCT serveur, en réaction à une requête de mode de lecture spéciale (705) en provenance du DHCT client laquelle demande un mode de lecture spéciale sur le DHCT client, le flux en mode de lecture spéciale comportant une série de trames d'images codées ayant été sélectionnées à partir du flux vidéo enregistré, le DHCT serveur (140A) comprenant :
une interface réseau (260) pour communiquer avec le DHCT client (140B) par l'intermédiaire dudit réseau ;
un support de stockage (170) lequel stocke le flux vidéo enregistré ;
une mémoire (270) sur laquelle est stockée au moins une application programmée ; et
un processeur (220) qui est programmé par l'application programmée afin de permettre au DHCT serveur (140A) de :
sélectionner (715, 720) une position de début du mode de lecture spéciale dans le flux enregistré ; et
sélectionner la série de trames d'images codées devant être transmises au DHCT client (140B), le DHCT serveur (140A) étant configuré de façon à :
sélectionner (725) une première trame d'image codée à partir du flux vidéo enregistré sur le support de stockage (170) sur la base de la position de début et du mode de lecture spéciale ;
récupérer une première séquence de paquets de transport encapsulant la première trame d'image ;
créer un premier paquet de transport contenant un premier paquet de contrôle client lequel est associé à la première trame d'image, le premier paquet de contrôle client comprenant la taille de la première trame d'image et une commande de décodeur pour le décodeur vidéo (101) du DHCT client (140B), la commande de décodeur comprenant des instructions lesquelles indiquent au décodeur vidéo (101) un horaire auquel une trame décodée devrait être affichée ;
transmettre, au décodeur vidéo (101) du DHCT client (140B), un flux en mode de lecture spéciale comprenant le premier paquet de transport suivi de la première séquence de paquets de transport, et
répéter les opérations de sélection, de récupération, de création et de transmission avec une prochaine trame d'image codée sélectionnée, jusqu'au moment où il a été déterminé qu'une requête d'arrêt du mode de lecture spéciale a été reçue et/ou qu'une fin du flux enregistré a été atteinte ;
cas dans lequel le DHCT client (140B) est configuré de façon à recevoir le flux en mode de lecture spéciale lequel correspond au flux vidéo enregistré, le DHCT client comprenant :
une interface réseau pour communiquer avec le DHCT serveur par l'intermédiaire du réseau ;
une mémoire (270) sur laquelle est stockée au moins une application programmée ; et
un processeur (220) qui est programmé par l'application programmée afin de permettre au DHCT client de :
recevoir, par l'intermédiaire de l'interface réseau, le premier paquet de transport contenant le premier paquet de contrôle client lequel est associé à la première trame d'image, le premier paquet de contrôle client comprenant la taille de la première trame d'image et la commande de décodeur ;
recevoir une séquence de paquets de transport contenant la première trame d'image ;
déterminer la réception de la première trame d'image sur la base de la taille de la première trame d'image à l'intérieur du premier paquet de contrôle client, et décoder la première trame d'image reçue ; et
afficher la trame d'image décodée en conformité avec la commande de décodeur.

2. Système selon la revendication 1, la commande de décodeur ordonnant au décodeur vidéo de savoir si la première trame d'image est affichée, ou non, après le décodage.

3. Système selon la revendication 1, la première trame d'image codée étant une trame I MPEG.

4. Système selon la revendication 3, la commande de décodeur ordonnant au décodeur vidéo d'afficher la trame I MPEG après le décodage.

5. Système selon la revendication 1, la trame d'image codée comprenant un horodatage de présentation, et le paquet de contrôle ordonnant au décodeur vidéo d'afficher la trame d'image codée à un horaire basé sur la réception de la trame d'image codée et non pas sur l'horodatage de présentation.

6. Système selon la revendication 1, le processeur du DHCT serveur étant programmé en outre pour permettre au DHCT serveur de :
récupérer une deuxième séquence de paquets de transport encapsulant un en-tête d'image d'une deuxième trame d'image codée, la deuxième trame d'image faisant immédiatement suite à la première trame d'image ; et
transmettre, au décodeur vidéo, la deuxième séquence de paquets de transport.

7. Système selon la revendication 1, le processeur du DHCT serveur étant programmé en outre pour permettre au DHCT serveur de :
recevoir une commande de mode de lecture spéciale en provenance du DHCT client ;
sélectionner, sur la base de la commande de mode de lecture spéciale, une troisième trame d'image codée à partir du flux vidéo enregistré sur le support de stockage ;
récupérer une troisième séquence de paquets de transport encapsulant la troisième trame d'image ;
créer un deuxième paquet de transport contenant un deuxième paquet de contrôle client lequel est associé à la deuxième trame d'image, le deuxième paquet de contrôle client comprenant la taille de la troisième trame d'image et une commande pour le décodeur vidéo ; et
transmettre, au décodeur vidéo, le deuxième paquet de transport suivi de la troisième séquence de paquets de transport.

8. Système selon la revendication 7, la commande de mode de lecture spéciale spécifiant un mode, un sens, et une vitesse.

9. Système selon la revendication 8, le processeur du DHCT serveur étant programmé en outre pour permettre au DHCT serveur de :
transmettre, au décodeur vidéo, à un horaire basé sur la vitesse, la troisième séquence de paquets de transport encapsulant la troisième trame d'image.

10. Système selon la revendication 1, le processeur du DHCT serveur étant programmé en outre pour permettre au DHCT serveur de :
sélectionner une séquence de trames P à partir du flux vidéo enregistré sur le support de stockage ;
récupérer une pluralité de séquences de paquets de transport, chaque séquence encapsulant l'une des trames P ; et
pour chaque trame P dans la séquence de trames P, transmettre au décodeur vidéo une commande ordonnant au décodeur vidéo de décoder, mais pas d'afficher, la trame P correspondante, suivie de la séquence de paquets de transport encapsulant la trame P correspondante.

11. Système selon la revendication 10, le processeur du DHCT serveur étant programmé en outre pour permettre au DHCT serveur de :
après avoir transmis la pluralité de séquences de paquets de transport,
sélectionner une trame P additionnelle à partir du flux vidéo enregistré sur le support de stockage,
récupérer une quatrième séquence de paquets de transport encapsulant la trame P additionnelle ;
transmettre, au décodeur vidéo, un paquet de transport lequel contient une commande ordonnant au décodeur vidéo de décoder et d'afficher la trame P additionnelle ; et
transmettre, au décodeur vidéo, la quatrième séquence de paquets de transport.

12. Système selon la revendication 1, le processeur du DHCT client étant programmé en outre pour permettre au DHCT client de s'abstenir de faire le décodage tant que la séquence entière de paquets de transport, contenant la première trame d'image, n'a pas été reçue.

13. Système selon la revendication 1, le processeur du DHCT client étant programmé en outre pour permettre au DHCT client de :
extraire les données d'image à partir de chacune des séquences de paquets de transport reçues ;
mettre en mémoire tampon les données d'image ; et
en réaction à la taille des données mises en mémoire tampon qui ont atteint la taille dans le premier paquet de contrôle client, décoder les données d'image mises en mémoire tampon.

14. Système selon la revendication 1, le processeur du DHCT client étant programmé en outre pour permettre au DHCT client de :
déterminer si un paquet de transport reçu contient un paquet de contrôle de mode de lecture spéciale ; en réaction à l'opération de détermination, extraire le paquet de contrôle de mode de lecture spéciale à partir du paquet de transport reçu ; et
extraire la taille de la première trame d'image et la commande de décodeur à partir du paquet de contrôle de mode de lecture spéciale.

15. Système selon la revendication 1, le processeur étant programmé en outre pour permettre au DHCT client de :
recevoir, après la première trame d'image, un ou plusieurs paquets de transport contenant une trame d'image partielle ; et
supprimer, sans effectuer de décodage, la trame d'image partielle.

16. Système selon la revendication 1, la première trame d'image reçue comprenant un horodatage de présentation, et le processeur du DHCT client étant programmé en outre pour permettre au DHCT client d'afficher l'image décodée lorsque le décodage est achevé et non pas à un horaire basé sur l'horodatage de présentation.

17. Système selon la revendication 1, le DHCT client comprenant en outre :
une interface d'entrée configurée de façon à recevoir une entrée Utilisateur comportant une commande de mode de lecture spéciale ;
cas dans lequel le processeur du DHCT client est programmé en outre pour permettre au DHCT client de demander, en réaction à la commande de mode de lecture spéciale, un flux en mode de lecture spéciale auprès du DHCT serveur par l'intermédiaire de l'interface réseau.

18. Système selon la revendication 17, la commande de mode de lecture spéciale spécifiant un mode, un sens, et une vitesse.
